# EUROPEAN PATENT SPECIFICATION

(11) **EP 4 640 050 B1**
(45) Date of publication and mention of the grant of the patent: **12.08.2026**
(21) Application number: 24198198.4
(22) Date of filing: 03.09.2024
(51) Int. Cl.: A01M 23/38

(54) **MOUSE TRAP**
MAUSEFALLE
PIÈGE À SOURIS

(30) Priority: 25.04.2024 CN 202410505836
(43) Date of publication of application: 29.10.2025
(73) Proprietor: Shenzhen Visson Technology Co., Ltd., Shenzhen Guangdong 518100 (CN)
(72) Inventor: LUO, Chengyang, ,Shenzhen, 518100 (CN); HU, Guoqing, Shenzhen, 518100 (CN)
(74) Representative: Metida

(56) References cited:
- WO-A1-2020/084439
- US-A- 3 815 278
- US-A- 4 205 480
- US-A1- 2009 013 587
- US-A1- 2009 223 112
- US-A1- 2019 029 246

## Description

### TECHNICAL FIELD

The present invention relates to the technical field of mouse trapping, and in particular to a mouse trap.

### BACKGROUND

The electric mouse cage is a kind of device that is used to catch mice. An electric mouse cage is usually made of metal or plastic and is widely used in rural areas and cities. The working principle of the electric mouse cage is to use food to induce rats to enter the cage and trigger the electric shock mechanism, and then the electric shock mechanism uses high-voltage micro-current to make them unable to escape.

In use of a traditional mouse trap, when the mouse steps on two conductive sheets and an electric shock is triggered, the mouse will struggle due to its instinctive reaction, during which the mouse will turn over or jump up, thus causing the mouse to release from the conductive sheets and the electric shock ceases, and if the electric shock ceases, the mouse will escape.

In US 2009/223112 Al a mouse trap is described which comprises an electric shock device and a mouse pressing device.

Therefore, there is a need to provide a new type of mouse trap, which can prevent the mouse from turning over or jumping up after being shocked, avoid the mouse from being released from contact with the conductive sheets, and improve the success rate of mouse trapping.

### SUMMARY

The present invention provides a mouse trap to solve the problem that when the mouse is shocked, the mouse will struggle and get out of contact with the conductive sheet.

In order to achieve the above purpose, the present invention adopts the technical solution as follows.

A mouse trap includes a shell, wherein the shell includes a base and an upper housing connected at a top of the base; an electric shock device, a mouse pressing device and a locking device are arranged in the shell;
the electric shock device includes a conductive element; and
the mouse pressing device is movably installed on a top wall of the shell and extends downwardly towards the base, and a bottom end of the mouse pressing device is located above the conductive element of the electric shock device; and
the locking device includes a locking element movably installed in the shell, and a driving mechanism for driving the locking element to move, wherein the locking element is capable of moving between a locked position and an unlocked position, and is engaged with the mouse pressing device when the locking element is located in the locked position, so as to limit the movement of the mouse pressing device; and
when the locking element is in the unlocked position, the locking element is released from the mouse pressing device, so that the mouse pressing device is released and becomes movable.

### BRIEF DESCRIPTION OF DRAWINGS

In order to explain the technical scheme of this application more clearly, the drawings needed in the implementation will be briefly introduced below. Obviously, the drawings described below are only some implementations of this application. For those skilled in the art, other drawings can be obtained according to these drawings without creative work.
FIG. 1 is a schematic front, perspective view of a mouse trap according to an embodiment of the present invention in a luring state.
FIG. 2 is an exploded view according to an embodiment of the present invention.
FIG. 3 is a schematic front, perspective view of the mouse trap according to an embodiment of the present invention in a luring state.
FIG. 4 is a schematic rear, perspective view of the mouse trap according to an embodiment of the present invention in a luring state.
FIG. 5 is a schematic structural view of the mouse trap according to an embodiment of the present invention, in which an upper housing is removed.
FIG. 6 is a partially enlarged schematic view of portion A in FIG. 5.
FIG. 7 is a schematic front, perspective view of the killing state of the mouse trap according to an embodiment of the present invention in a killing state.
FIG. 8 is a schematic structural view of the mouse trap according to an embodiment of the present invention with the upper housing removed.

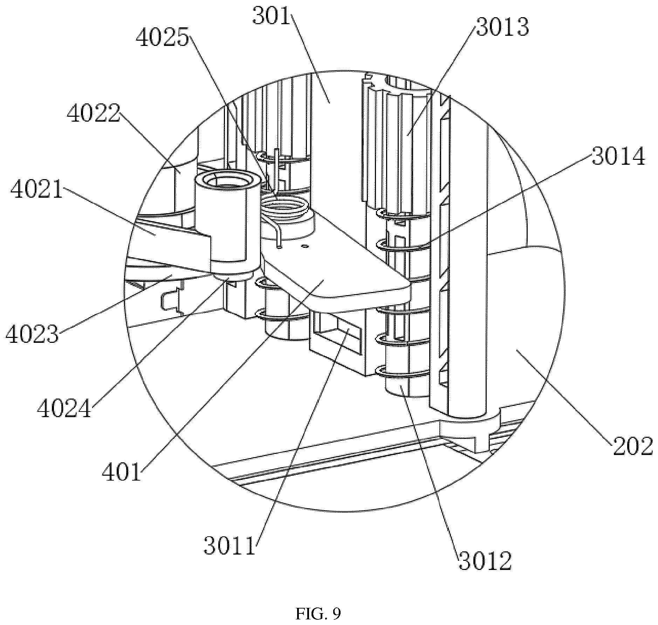

FIG. 9 is a partially enlarged schematic view of portion B in FIG. 8.
FIG. 10 is a schematic view of the mouse trap according to an embodiment of the present invention in which the battery compartment cover plate is removed.
FIG. 11 is a schematic view of the mouse trap according to an embodiment of the present invention in which the left side panel of the upper housing is removed.
FIG. 12 is a partially enlarged schematic view of portion C in FIG. 11.
FIG. 13 is a cross-sectional view of the middle part of FIG. 11.
FIG. 14 is a schematic structural view of a mouse pressing device of a mouse trap according to an embodiment of the present invention.

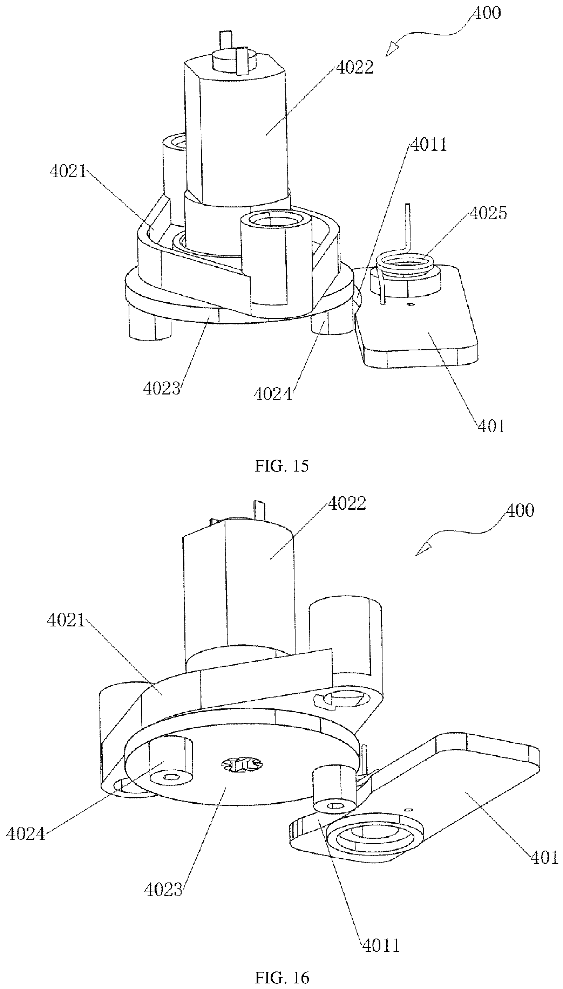

FIG. 15 is a schematic structural view of a locking device of a mouse trap according to an embodiment of the present invention.
FIG. 16 is a schematic structural view of the locking device of the mouse trap according to an embodiment of the present invention viewed from another angle.
FIG. 17 is a schematic view of the upper housing according to an embodiment of the present invention.
FIG. 18 is a schematic diagram showing connection of modules of a mouse trap according to an embodiment of the present invention.
FIG. 19 is a schematic structural view of a pressing plate according to a second embodiment.
FIG. 20 is a schematic structural view of the pressing plate according to a third embodiment.
FIG. 21 is a schematic structural view of the pressing plate according to a fourth embodiment.

Reference numerals : 100-Shell, 101-Upper housing, 1011-Trap opening, 1012-Trap region, 1013-Installation cavity, 1014-Battery compartment, 1015-Cover plate, 1016-Side plate, 1017-Bait tank, 102-Base, 200-Electric shock device, 201-Conductive sheet, 202-Battery, 203-High-voltage transformer, 204-Control circuit board, 2041-Switch, 300-Mouse pressing device, 301-Mouse pressing frame, 3011-Engaging groove, 3012-Guide post, 3013-Sleeve, 3014-Compression spring, 302-Pressing plate, 3021-Fixed plate, 3022-Movable plate, 3023-Sliding groove, 3024-Slide bar, 3025-Anti-skid rib, 3026-Through groove, 400-Locking device, 401-Locking element, 4011-Arc-shaped groove, 402-Driving mechanism, 4021-Mounting frame, 4022-Driving motor, 4023-Turntable, 4024-Cylinder, 4025-Torsion spring.

### DESCRIPTION OF EMBODIMENTS

In describing the preferred embodiments, specific terminology will be resorted to for the sake of clarity. It is to be understood that each specific term includes all technical equivalents which operate in a similar manner to accomplish a similar purpose.

While various aspects and features of certain embodiments have been summarized above, the following detailed description illustrates a few exemplary embodiments in further detail to enable one skilled in the art to practice such embodiments. Reference will now be made in detail to embodiments of the inventive concept, examples of which are illustrated in the accompanying drawings. The accompanying drawings are not necessarily drawn to scale. The described examples are provided for illustrative purposes and are not intended to limit the scope of the invention. It should be understood, however, that persons having ordinary skill in the art may practice the inventive concept without these specific details.

It will be understood that, although the terms first, second, etc. may be used herein to describe various elements, these elements should not be limited by these terms. These terms are only used to distinguish one element from another. For example, a first attachment could be termed a second attachment, and, similarly, a second attachment could be termed a first attachment, without departing from the scope of the inventive concept.

It will be understood that when an element or layer is referred to as being "on," "coupled to," or "connected to" another element or layer, it can be directly on, directly coupled to or directly connected to the other element or layer, or intervening elements or layers may be present. In contrast, when an element is referred to as being "directly on," "directly coupled to," or "directly connected to" another element or layer, there are no intervening elements or layers present. Like numbers refer to like elements throughout. As used herein, the term "and/or" includes any and all combinations of one or more of the associated listed items.

As used in the description of the inventive concept and the appended claims, the singular forms "a," "an," and "the" are intended to include the plural forms as well, unless the context clearly indicates other.

The present invention provides a mouse trap, which includes a shell 100. The shell 100 includes a base 102, an upper housing 101 installed at a top of the base 102, as well as an electric shock device 200, a mouse pressing device 300 and a locking device 400 arranged in the shell 100.

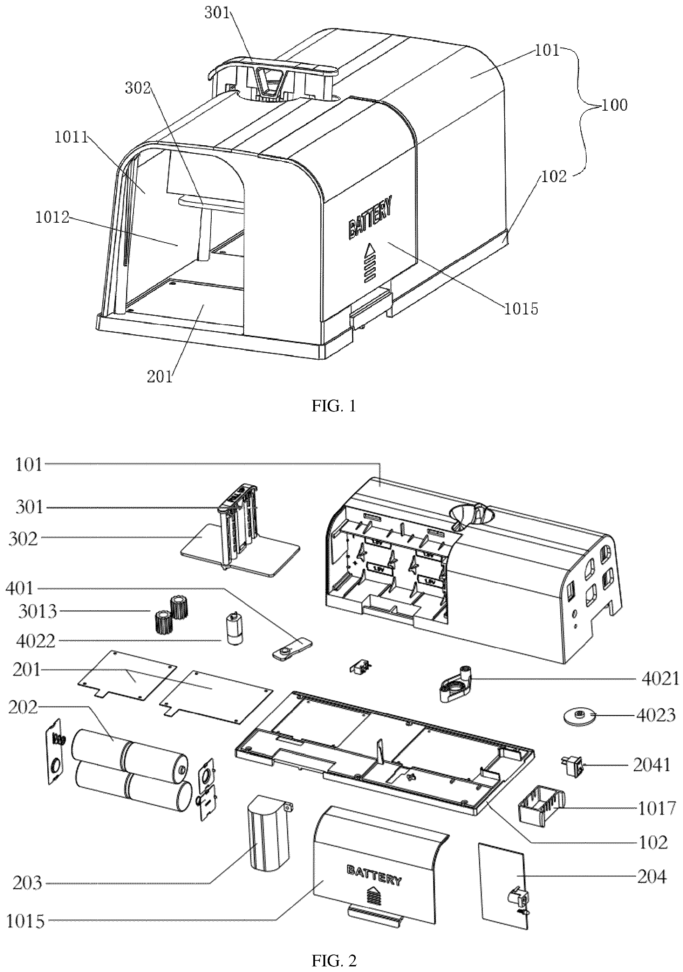

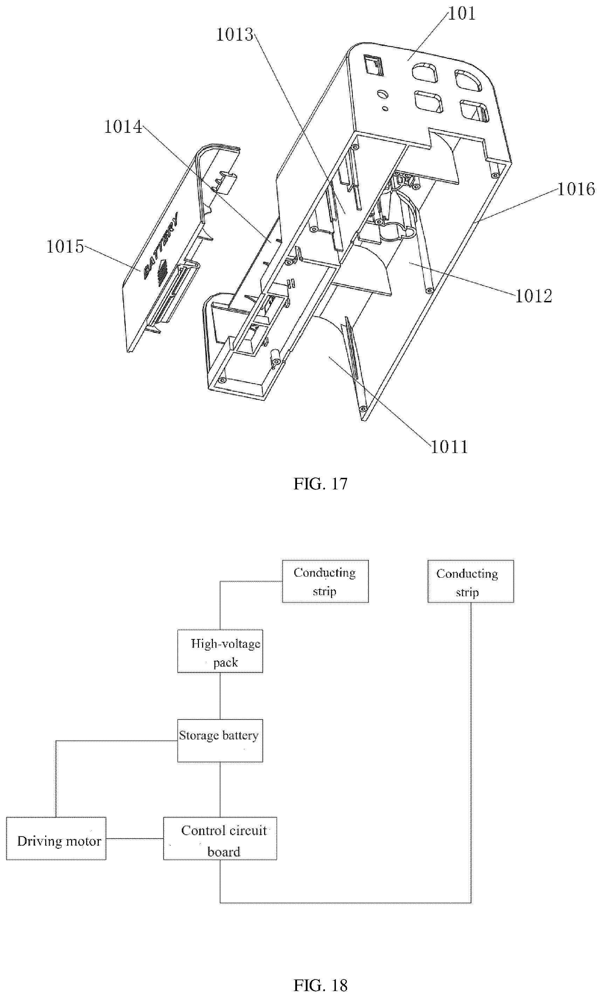

As shown in FIGs. 1, 10 and 17, the upper housing 101 includes a top wall and side walls extending from the top wall. An accommodating cavity is defined in the upper housing 101, and the bottom of the upper housing 101 is open. The side wall of the upper housing 101 includes opposed front end face and rear end face, and two side faces which are respectively connected between the front end face and the rear end face on two sides. The front end surface of the upper housing 101 is provided with a trap opening 1011, and a bait tank 1017 is provided in the upper housing 101 for arrangement of bait.

The bait tank 1017 may be arranged adjacent to the rear end face of the upper housing 101, that is, the end opposite to the trap opening 1011. Preferably, the rear end face of the upper housing 101 is provided with a through hole, through which the smell of bait can be emitted to the outside of the trap, to attract mice, such that the attracted mice may enter the trap through the trap opening 1011. In this embodiment, the bait tank 1017 is a separate container, which is detachably installed in the shell 100. The bait tank 1017 is installed corresponding to the through hole and can be embedded in the wall of the upper housing 101.

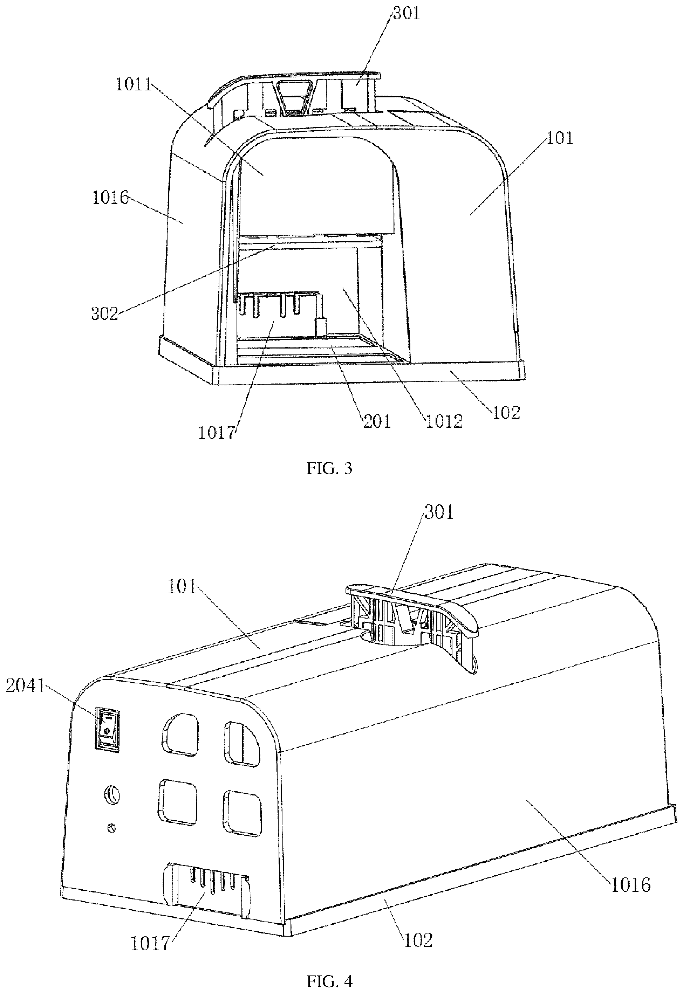

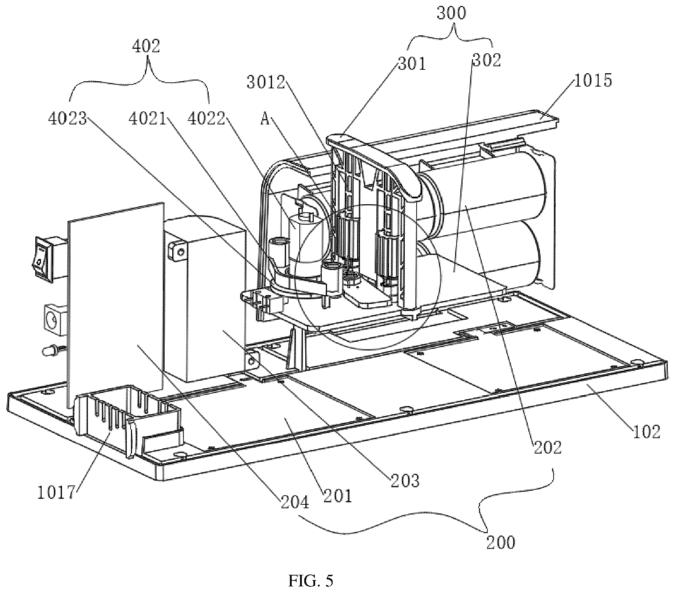

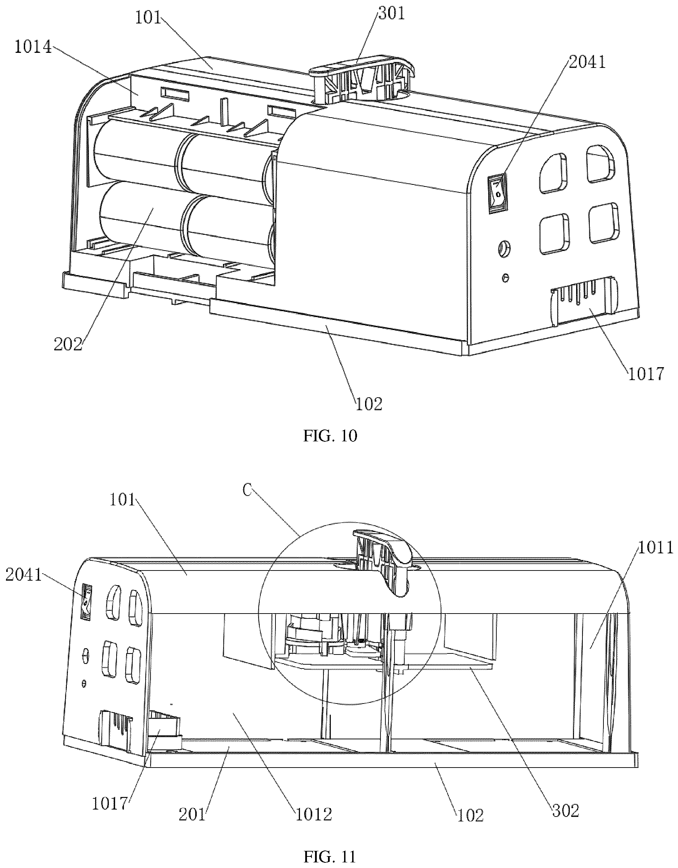

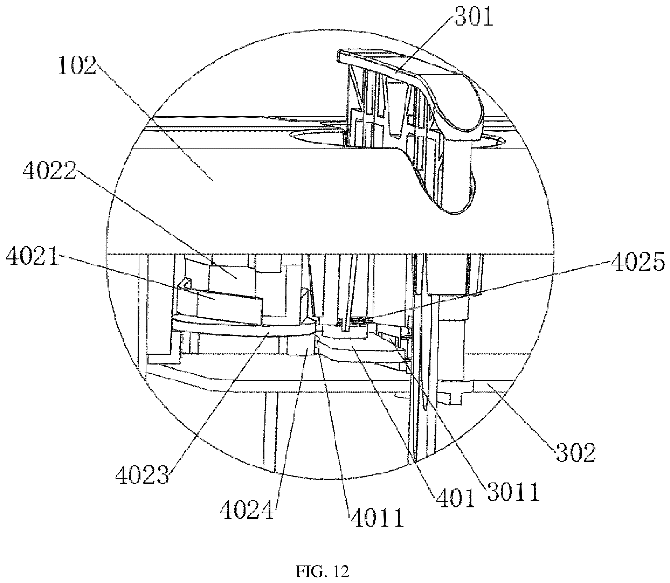

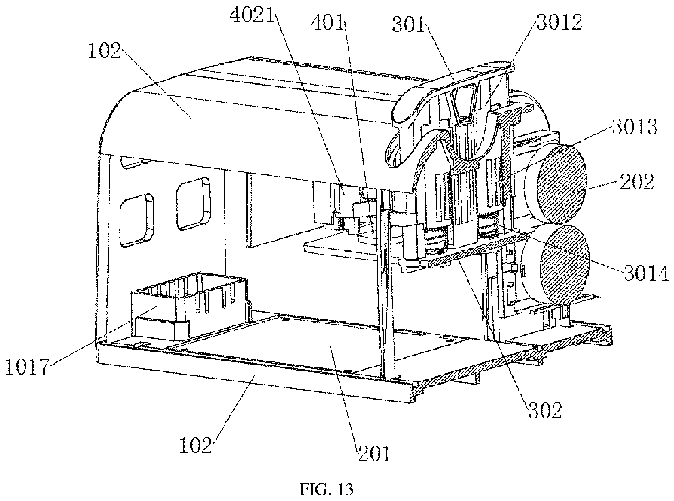

In some embodiments, as shown in FIGs. 4 and 5, the top of the bait tank 1017 is open, which is convenient for taking and placing the bait. The wall of the bait tank 1017 is provided with a plurality of perforations, which is beneficial to the odor emission of the bait. Preferably, the perforations are elongated, and are arranged in parallel. The left and right sides of the upper housing 101 are provided with detachable side plates 1016, so that when the trap needs to be repaired or maintained, the side plates 1016 can be opened to expose the accommodating cavity for repair or maintenance, as shown in FIGs. 11, 12 and 13.

The electric shock device 200 includes a conductive element, a battery 202, a high-voltage transformer 203 and a control circuit board 204. The accommodating cavity of the upper housing 101 includes a battery compartment 1014, and the battery 202 is installed in the battery compartment 1014. The accommodating cavity also includes an installation cavity 1013 in the upper housing 101, which is separated from the battery compartment 1014, and both the high-voltage transformer 203 and the control circuit board 204 are installed in the installation cavity 1013. The accommodating cavity of the upper housing 101 further includes a trap region 1012, and the installation cavity 1013 and/or the battery compartment 1014 are isolated from the trap region 1012. The upper housing 101 is provided with a detachable cover plate 1015 corresponding to the battery compartment 1014. In this embodiment, the trap region 1012 communicates with the trap opening 1011, and the trap region is an area for trapping mice. The conductive element includes at least two conductive sheets 201, which are installed on the upper surface of the base 102 in the trap region 1012. Alternatively, the conductive sheet 201 may be fixed in the upper housing 101. The control circuit board 204 preferably has an MCU.

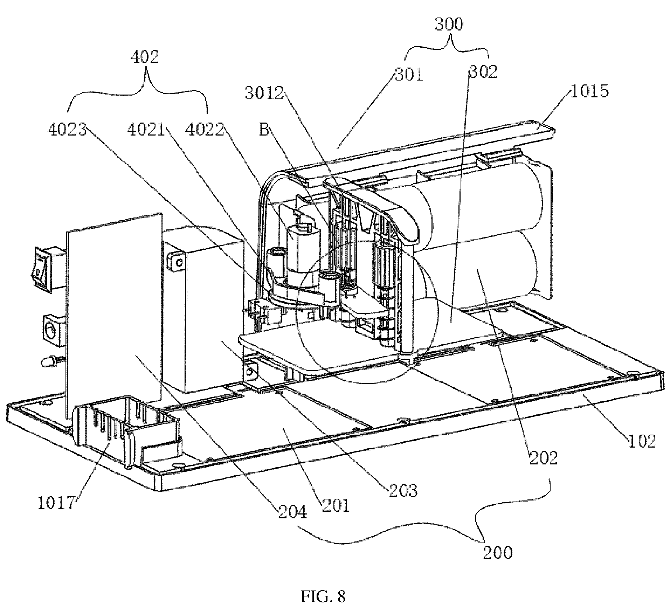

As shown in FIG. 5, FIG. 8, and FIG. 18, in one embodiment, two conductive sheets 201 include a positive electrode and a negative electrode which are isolated from each other, and there is a gap between the two conductive sheets 201. One conductive sheet 201 is electrically connected to one end of the high-voltage transformer 203, the other end of the high-voltage transformer 203 is electrically connected to one electrode of a battery 202, the other electrode of the battery 202 is electrically connected to the control circuit board 204, and the other conductive sheet 201 is also electrically connected to the control circuit board 204.

The battery compartment 1014 and the installation cavity 1013 are formed separately from the area for trapping mice, i.e., the trap region 1012 in the upper housing 101, so as to avoid the damage of the battery 202, the high-voltage transformer 203 and the control circuit board 204 during trapping mice. The battery compartment 1014, which is an independent space for accommodating the battery 202, is provided with a cover plate 1015, and the battery 202 can be replaced after opening the cover plate 1015, as shown in FIG. 10. The high-voltage transformer 203 can increase the circuit voltage, and the control circuit board 204 is provided with a switch 2041, which penetrates from the rear end face of the upper housing 101. As shown in FIG. 4, the electric shock mode can be turned on or off by the switch 2041.

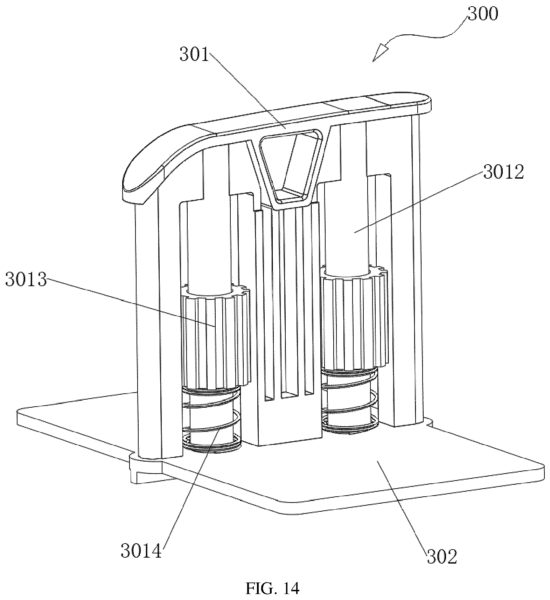

As shown in FIGs. 5, 8 and 14, the mouse pressing device 300 includes a mouse pressing frame 301, which is movably installed on the top wall of the upper housing 101 and extends downwardly towards the base 102 through the top wall of the upper housing 101 into the trap region 1012. The upper end of the mouse pressing frame 301 extends through the upper housing 101, the lower end is located within the upper housing 101, and the mouse pressing frame 301 is capable of moving up and down relative to the upper housing 101. The mouse pressing device 300 further includes a pressing plate 302, which is fixedly connected to the bottom of the mouse pressing frame 301 and located above the two conductive sheets 201. Preferably, the bottom surface of the pressing plate 302 extends substantially in the horizontal direction. This embodiment is also provided with a guide mechanism for supporting and guiding the movement of the mouse pressing frame 301. As an embodiment, as shown in FIG. 14, the guide mechanism includes a guide post 3012 and a sleeve 3013. The guide post 3012 is fixedly connected to the mouse pressing frame 301, and the sleeve 3013 is fixedly connected to the upper housing 101, the sleeve 3013 is mounted around the periphery of the guide post 3012, and the guide post 3012 is capable of sliding in the sleeve 3013. The guide post 3012 is connected between the mouse pressing frame 301 and the pressing plate 302, the upper part of the guide post 3012 is connected with the mouse pressing frame 301, the middle part of the guide post 3012 passes through the sleeve 3013, and the bottom end of the guide post 3012 is fixedly connected with the pressing plate 302. At least two guide posts 3012 are provided. An elastic element is installed between the sleeve 3013 and the pressing plate 302. When the pressing plate 302 moves towards the sleeve 3013 along with the movement of the mouse pressing frame 301, the elastic element is compressed. The elastic element is a compression spring 3014, and the compression spring 3014 is mounted around the periphery of the guide post 3012, and both ends of the compression spring 3014 respectively abut against the sleeve 3013 and the pressing plate 302.

Because the sleeve 3013 is stationary relative to the upper housing 101, and the sleeve 3013 is connected with the guide post 3012 in a sliding way, the mouse pressing frame 301 is capable of sliding up and down along the sleeve 3013, such that the mouse pressing frame 301 is capable of sliding up and down in the upper housing 101, thereby driving the pressing plate 302 to slide up and down synchronously.

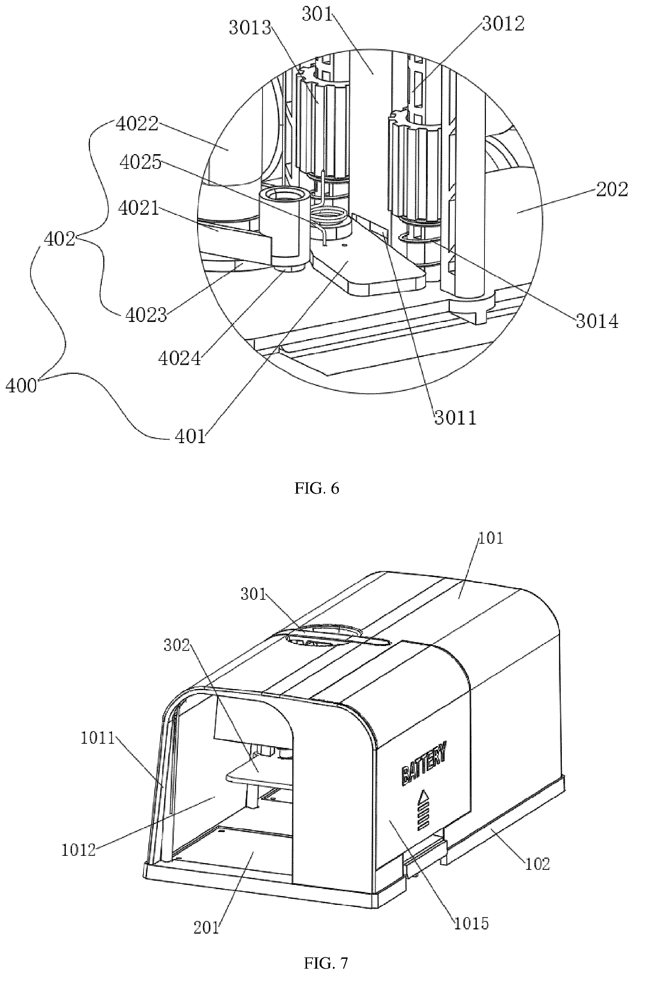

Preferably, as shown in FIGs. 5 and 6, the outer periphery of the sleeve 3013 has a plurality of protrusions that are evenly disposed on in a circumferential direction. and the convex structure is engaged in the upper housing 101 to provide a rotation-proof connection therebetween, so that the sleeve 3013 is firmly positioned relative to the upper housing 101. In other embodiments, it is possible that only one protrusion is provided, the single protrusion engaged with the upper housing 101 can also form the rotation-proof connection.

The top of the upper housing 101 is provided with a concave structure, and the top of the mouse pressing frame 301 penetrates through the central portion of the concave structure, as shown in Figures 4 and 7. Due to the space formed by the concave structure, it is convenient for users to grasp the top of the mouse pressing frame 301 with their hands and pull the mouse pressing frame 301 to move up and down. When the mouse pressing frame 301 and the pressing plate 302 are pulled to slide upwardly, the compression spring 3014 will be compressed and generate an elastic force, and when the pulling force applied to the mouse pressing frame 301 is removed, the compressed compression spring 3014 will push the mouse pressing frame 301 and the pressing plate 302 to move downwardly quickly due to the resilience.

The locking device 400 includes a locking element 401 movably installed in the shell 100, and a driving mechanism 402 for driving the locking element 401 to move. The locking element 401 is capable of moving between a locked position and an unlocked position, wherein when the locking element 401 is located in the locked position, it is engaged with the mouse pressing device 300, thereby limiting the movement of the mouse pressing device 300; and when the locking element 401 is in the unlocked position, the locking element 401 is disengaged from the mouse pressing device 300, so that the mouse pressing device 300 is released and becomes movable. The unlocked mouse pressing device will press the body of the mouse, making the struggling mouse difficult to separate from the conductive element, and thus the electric shock function is prevented from stopping, so that the electric shock death rate or capture rate of the mouse can be improved in this way.

The mouse pressing frame 301 is provided with a limiting part matched with the locking element 401. When the locking element 401 moves to and reaches the locked position, the locking element 401 is engaged with the limiting part of the mouse pressing frame 301, thus the axial position of the mouse pressing frame 301 is locked. At this time, the mouse pressing frame 301 can no longer move up and down. When the locking element 401 moves to and reaches the unlocked position, the locking element 401 is disengaged from the limiting part of the mouse pressing frame 301, thereby releasing the mouse pressing frame 301, and the mouse pressing frame 301 returns to the state of being able to move up and down.

As an example, the locking element 401 is plate-shaped and in the form of an engaging plate, and the limiting part of the mouse pressing frame 301 is an engaging groove 3011 defined on one side thereof. In the locked position, one end of the engaging plate is engaged into the engaging groove 3011, and in the unlocked position, the clamping plate is released from the engaging groove 3011.

The locking device 400 is not limited to the above-mentioned embodiment. In other embodiments of the locking device 400 (not shown), the locking device 400 may also achieve locking and unlocking by means of linear reciprocating motion, for example, the driving mechanism 402 drives the locking element 401 to perform linear reciprocating motion, so that the locking element is engaged into or disengaged from the engaging groove 3011, and thus lock and unlock of the mouse pressing device 300 can also be achieved.

The locking element 401 is rotatable. When the mouse pressing frame 301 is pulled to the top, the engaging groove 3011 is aligned with the locking element 401, and the locking element 401 rotates until one end of the locking element 401 is engaged into the engaging groove 3011. At this time, if the external pulling force applied to the mouse pressing frame 301 is removed, the mouse pressing frame 301 will be blocked by the locking element 401 engaged in the engaging groove 3011, thus preventing the mouse pressing frame 301 from moving downwardly automatically.

Preferably, the locking device 400 further includes a biasing element, preferably a torsion spring 4025. The torsion spring 4025 abuts between the upper housing 101 and the locking element 401 to provide a force to the locking element 401, so that the locking element 401 has a tendency to rotate in the first circumferential direction, that is, it biases the locking element 401 towards the locked position, so that when the mouse pressing frame 301 is pulled to a position where the engaging groove 3011 is aligned with the locking element 401, the locking element 401 will be pushed by the torsion spring 4025 to move and the one end thereof will be automatically engaged into the engaging groove 3011, so that the position of the mouse pressing frame 301 is fixed in the vertical direction.

The driving mechanism 402 includes a driving motor 4022, which is in torque transmission connection with the locking element 401 for driving the locking element 401 to move between the locked position and the unlocked position. The driving mechanism 402 further includes a mounting frame 4021 and a turntable 4023. The mounting frame 4021 is fixedly installed inside the upper housing 101. The driving motor 4022 is installed inside the mounting frame 4021. The turntable 4023 is rotatably installed at the bottom of the mounting frame 4021. The motor shaft of the driving motor 4022 passes through the mounting frame 4021 and is fixedly connected with the top of the turntable 4023. The driving motor 4022 is electrically connected with the battery 202, so that the battery 202 supplies power to it. The driving motor 4022 is further electrically connected with the control circuit board 204, so that the operation of the driving motor 4022 is controlled by the control circuit board 204. There is a coupling mechanism between the turntable 4023 and the locking element 401. The coupling mechanism includes an arc-shaped groove 4011 and at least one cylinder 4024. The arc-shaped groove 4011 is formed on the locking element 401 at one side facing the turntable 4023, and the at least one cylinder 4024 is arranged at the bottom of the turntable 4023. The cylinder 4024 of the turntable 4023 can rotate with the turntable 4023 to a position interact with the arc-shaped groove 4011.

In this embodiment, the driving motor 4022, the mounting frame 4021 and the locking element 401 are all installed at the upper end inside the upper housing 101 above the pressing plate 302. The cylinder 4024 is capable of sliding in the arc-shaped groove 4011, and the driving motor 4022 can drive the turntable 4023 to rotate for one circle in the first direction. When the turntable 4023 rotates, the cylinder 4024 at the bottom of the turntable 4023 rotates synchronously, so that the cylinder 4024 rotated in this way will slide over the arc-shaped groove 4011. When the cylinder 4024 rotates in the first direction and slides over the arc-shaped groove 4011, the cylinder 4024 will exert a component force on the locking element 401 to rotate in the second direction, and this component force can overcome the elastic force of the torsion spring 4025 and push the locking element 401 to rotate so as to be disengaged from the engaging groove 3011, so that the locking element 401 releases the restriction on the mouse pressing frame 301. After the mouse pressing frame 301 is released from the restriction, the pressing plate 302 is driven to move downwardly rapidly under the push of the compression spring 3014 by the elastic force.

When the cylinder 4024 completely slides out of the arc-shaped groove 4011, the cylinder 4024 will be out of contact with the locking element 401, and then the torsion spring 4025 will push the locking element 401 to rotate in the first direction again. However, at this time, because the mouse pressing frame 301 has moved down and its engaging groove 3011 is offset from the locking element 401, the one end of the locking element 401 will contact with the side of the mouse pressing frame 301, and only when the mouse pressing frame 301 is pulled up again, the locking element 401 will slide on the surface of the mouse pressing frame 301 until being aligned with and moving into the engaging groove 3011, thus limiting the mouse pressing frame 301 in the vertical direction again.

In summary, when using the trap, firstly, the bait for attracting mice is put into the bait tank 1017, and then the mouse pressing frame 301 is pulled manually to lift to the uppermost position, in which the locking element 401 is rotated and engaged into the engaging groove 3011 under the elastic force of the torsion spring 4025, and then the mouse pressing frame 301 can be released from hand, and then the switch 2041 on the control circuit board 204 is turned on, so that the trap will be in a luring state, as shown in FIG. 1, FIG. 2 to FIG. 5.

When the mouse is lured, the mouse will enter the shell 100 from the trap opening 1011 and move towards the bait tank 1017. During the movement of the mouse, the mouse will step on the two conductive sheets 201, so that the circuit between the two conductive sheets 201 will be conducted, and then the whole circuit of the electric shock device 200 will form a loop, and the mouse will be shocked. When the mouse is shocked, the MCU on the control circuit board 204 will also be powered on and receive an electrical signal, and then the MCU will send a signal to the driving motor 4022 to make it start automatically. After the start, the driving motor 4022 will push the turntable 4023 to rotate for one circle in the first direction, and then the turntable 4023 will push the locking element 401 out of the engaging groove 3011 by the cylinder 4024, and at the same time, the mouse pressing frame 301 will be free of restriction and quickly slide downwardly under the elastic force of the compression spring 3014. Therefore, the mouse pressing frame 301 after sliding down will make the pressing plate 302 press the mouse towards the conductive sheet 201, as shown in FIG. 6 to FIG. 7, so that the struggling mouse is difficult to separate from the conductive sheet 201, and the electric shock function is prevented from stopping, and the electric shock mortality rate or capture rate of the mouse can be improved.

In other embodiments (not shown), the mouse pressing device 300 may also be provided with only the mouse pressing frame 301 without the pressing plate 302, in which case the bottom of the mouse pressing frame 301 will directly press the mouse. With this structure, the manufacturing cost of the trap can be reduced. Moreover, the mouse pressing device 300 is not limited to the shape disclosed in this embodiment, but in other embodiments (not shown), it can also be any other three-dimensional geometric shape suitable for sliding back and forth on the upper housing 101, such as a cylinder, a plate, etc.

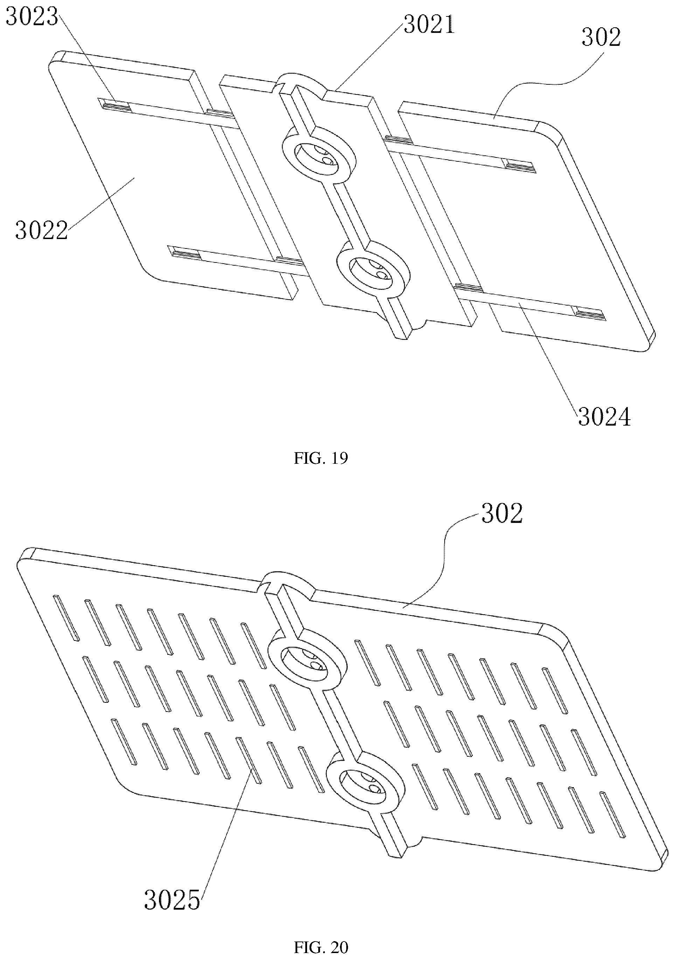

The pressing plate 302 is not limited to the structure in this embodiment. In the second embodiment of the pressing plate 302, as shown in FIG. 19, the pressing plate 302 includes at least one fixed plate 3021 and at least one movable plate 3022. The fixed plate 3021 is installed at the bottom of the mouse pressing frame 301, and the movable plate 3022 is located at one side of the fixed plate 3021. At least one slide bar 3024 is installed on the fixed plate 3021 at a side facing the movable plate 3022. One side of the movable plate 3022 facing the fixed plate 3021 is provided with at least one sliding groove 3023, and the slide bar 3024 is engaged into and connected with the sliding groove 3023 in a sliding manner.

The movable plate 3022 and the fixed plate 3021 are slidable one relative to another through the coupling structure between the slide bar 3024 and the sliding groove 3023, so as to adjust the distance between the fixed plate 3021 and the movable plate 3022. In this way, the size of the pressing plate 302 can be adjusted, so that the size of the pressing plate 302 can be adjusted before trapping the mouse according to the size of the mouse to be captured, to improve the capture success rate.

In a third embodiment of the pressing plate 302, as shown in FIG. 20, the bottom of the pressing plate 302 is provided with a plurality of anti-skid ribs 3025 protruding outward, so that after the mouse is pressed, the friction between the pressing plate 302 and the mouse is increased, which increases the difficulty for the mouse to separate from the pressing plate 302.

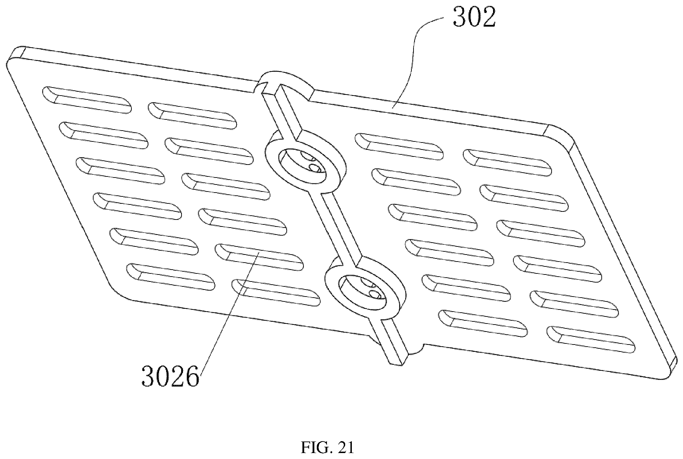

In a fourth embodiment of the pressing plate 302, as shown in FIG. 21, the surface of the pressing plate 302 is provided with a plurality of through grooves 3026, which can make the pressing plate 302 form a hollow structure. By means of the pressing plate 302 with the hollow structure, the raw material of the pressing plate 302 can be reduced, and the hollow structure can also increase the friction between the pressing plate 302 and the mouse, so that the difficulty for the mouse to separate from the pressing of the pressing plate 302 is increased.

The pressing plate 302 is not limited to the above-mentioned shapes or structures, and any other shapes or structures that are beneficial to catching mice can be adopted.

Conditional language used herein, such as, among others, "can," "could," "might," "may," "e.g.," and the like, unless specifically stated otherwise, or otherwise understood within the context as used, is generally intended to convey that certain examples include, while other examples do not include, certain features, elements, and/or steps. Thus, such conditional language is not generally intended to imply that features, elements and/or steps are in any way required for one or more examples or that one or more examples necessarily include logic for deciding, with or without author input or prompting, whether these features, elements and/or steps are included or are to be performed in any particular example.

The terms "comprising," "including," "having," and the like are synonymous and are used inclusively, in an open-ended fashion, and do not exclude additional elements, features, acts, operations, and so forth. Also, the term "or" is used in its inclusive sense (and not in its exclusive sense) so that when used, for example, to connect a list of elements, the term "or" means one, some, or all of the elements in the list. The use of "adapted to" or "configured to" herein is meant as open and inclusive language that does not foreclose devices adapted to or configured to perform additional tasks or steps. Additionally, the use of "based on" is meant to be open and inclusive, in that a process, step, calculation, or other action "based on" one or more recited conditions or values may, in practice, be based on additional conditions or values beyond those recited. Similarly, the use of "based at least in part on" is meant to be open and inclusive, in that a process, step, calculation, or other action "based at least in part on" one or more recited conditions or values may, in practice, be based on additional conditions or values beyond those recited. Headings, lists, and numbering included herein are for ease of explanation only and are not meant to be limiting.

## Claims

1. A mouse trap, comprising a shell (100), wherein the shell (100) comprises a base (102) and an upper housing (101) connected at a top of the base (102);
wherein the mouse trap further comprises an electric shock device (200), a mouse pressing device (300) and a locking device (400) arranged in the shell (100);
wherein, the electric shock device (200) comprises a conductive element (201);
wherein the mouse pressing device (300) is movably installed on a top wall of the shell (100);
wherein the locking device (400) comprises a locking element (401) movably installed in the shell (100), and a driving mechanism (402) for driving the locking element (401) to move,
**characterized in that**:
the mouse pressing device (300) extends downwardly towards the base (102), and a bottom end of the mouse pressing device (300) is located above the conductive element (201) of the electric shock device (200);
wherein the locking element (401) is movable between a locked position and an unlocked position, and is engaged with the mouse pressing device (300) when the locking element (401) is located in the locked position, so as to limit the movement of the mouse pressing device (300); and
wherein when the locking element (401) is in the unlocked position, the locking element (401) is disengaged from the mouse pressing device (300), so that the mouse pressing device (300) is released and becomes movable.

2. The mouse trap according to claim 1, wherein the mouse pressing device (300) is provided with a limiting part matched with the locking element (401), and when the locking element (401) moves to and reaches the locked position, the locking element (401) is engaged with the limiting part of the mouse pressing device (300) to lock the mouse pressing device (300); and
when the locking element (401) moves to and reaches the unlocked position, the locking element (401) is disengaged from the limiting part of the mouse pressing device (300) to release the mouse pressing device (300).

3. The mouse trap according to claim 2, wherein the locking element (401) is an engaging plate, and the limiting part of the mouse pressing device (300) is an engaging groove (3011) formed at one side of the mouse pressing device (300); in the locked position, one end of the engaging plate is engaged into the engaging groove (3011), and in the unlocked position, the clamping plate is disengaged from the engaging groove (3011).

4. The mouse trap according to any one of claims 1 to 3, wherein the electric shock device (200) further comprises a battery (202), a high-voltage transformer (203) and a control circuit board (204), wherein a battery compartment (1014) is defined in the upper housing (101), the battery (202) is installed in the battery compartment (1014), and a detachable cover plate (1015) is arranged on the upper housing (101) corresponding to the battery compartment (1014).

5. The mouse trap according to claim 4, wherein an installation cavity (1013) is further defined in the upper housing (101), the installation cavity (1013) is separated from the battery compartment (1014), and both the high-voltage transformer (203) and the control circuit board (204) are installed in the installation cavity (1013).

6. The mouse trap according to claim 5, wherein the upper housing (101) further comprises a trap region (1012), and the installation cavity (1013) and/or the battery compartment (1014) are isolated from the trap region (1012).

7. The mouse trap according to any one of claims 1 to 6, wherein the mouse pressing device (300) comprises a mouse pressing frame (301), an upper end of the mouse pressing device (300) extends through the upper housing (101) and a lower end of the mouse pressing device (300) is located within the upper housing (101); the mouse pressing frame (301) is movable upwardly and downwardly relative to the upper housing (101), and a guide mechanism is formed between the mouse pressing frame (301) and the upper housing (101).

8. The mouse trap according to claim 7, wherein the mouse pressing device (300) further comprises a pressing plate (302) installed at a bottom of the mouse pressing frame (301) and above the conductive element (201), and the pressing plate (302) has a bottom surface extending substantially horizontally.

9. The mouse trap according to claim 8, wherein the mouse trap has an additional feature selected from one of the following:
a) the pressing plate (302) comprises at least one fixed plate (3021) and at least one movable plate (3022); the fixed plate (3021) is connected at the bottom of the mouse pressing frame (301), and the movable plate (3022) is located at one side of the fixed plate (3021);
b) the bottom of the pressing plate (302) is provided with a plurality of anti-skid ribs (3205) protruding outwards;
c) a surface of the pressing plate (302) is provided with a plurality of through grooves (3026); and
d) the guide mechanism comprises at least one guide post (3012) and at least one sleeve (3013), wherein the at least one guide post (3012) is fixedly connected to the mouse pressing frame (301), the at least one sleeve (3013) is fixedly connected with the upper housing (101); and each of the at least one sleeve (3013) is mounted around a periphery of a corresponding one of the at least one guide post (3012) and the at least one guide post (3012) is slidable in the at least one sleeve (3013).

10. The mouse trap according to claim 9 in combination with feature a), wherein at least one slide bar (3024) is installed on a side of the fixed plate (3021) facing the movable plate (3022), and at least one sliding groove (3023) is defined on the movable plate (3022) at a side facing the fixed plate (3021), and the at least one slide bar (3024) is engaged into and slidably connected with the at least one sliding groove (3023).

11. The mouse trap according to claim 9 in combination with feature d), wherein the mouse trap has an additional feature e) or f):
e) at least one guide post (3012) comprises two or more guide posts (3012), the two or more guide posts (3012) are connected between the mouse pressing frame (301) and the pressing plate (302); an upper part of each guide post (3012) is connected with the mouse pressing frame (301), a middle part of each guide post (3012) passes through a corresponding one of the at least one sleeve (3013), and a bottom end of each guide post (3012) is fixedly connected with the pressing plate (302);
f) an elastic element is installed between each of the at least one sleeve (3013) and a corresponding one of the at least one pressing plate (302), and the elastic element is compressed when the pressing plate (302) moves towards the at least one sleeve (3013) along with the movement of the mouse pressing frame (301).

12. The mouse trap according to claim 11 in combination with feature f), wherein the elastic element is a compression spring (3014) mounted around a periphery of a corresponding one of the at least one guide post (3012), and both ends of the compression spring (3014) respectively abut against the sleeve (3013) and the pressing plate (302).

13. The mouse trap according to any one of claims 1 to 12, wherein the mouse trap further has an additional feature m) or n):
m) the driving mechanism (402) comprises a driving motor (4022) in torque transmission connection with the locking element for driving the locking element to move between the locked position and the unlocked position;
n) the locking device (400) further comprises a biasing element compressed between the upper housing (101) and the locking element to provide a force to the locking element to bias the locking element towards the locked position.

14. The mouse trap according to claim 13 in combination with feature m), wherein the driving mechanism (402) further comprises a mounting frame (4021) and a turntable (4023), wherein the mounting frame (4021) is fixedly installed inside the upper housing (101); the driving motor (4022) is installed inside the mounting frame (4021), and the turntable (4023) is rotatably installed at a bottom of the mounting frame (4021); a portion of the driving motor (4022) is in torque connection with the turntable (4023), and a coupling mechanism is formed between the turntable (4023) and the locking element.

15. The mouse trap according to claim 14, wherein the coupling mechanism comprises an arc-shaped groove (4011) and at least one cylinder (4024), wherein the arc-shaped groove (4011) is formed on the locking element at a side facing the turntable (4023), and the at least one cylinder (4024) is arranged at a bottom of the turntable (4023).

## Patentansprüche

1. Eine Mausefalle, umfassend ein Gehäuse (100), wobei das Gehäuse (100) eine Basis (102) und ein oberes Gehäuse (101) umfasst, das an einer Oberseite der Basis (102) verbunden ist;
wobei die Mausefalle ferner eine Stromschlagvorrichtung (200), eine Mäusedrückvorrichtung (300) und eine Verriegelungsvorrichtung (400) umfasst, die in dem Gehäuse (100) angeordnet sind;
wobei die Stromschlagvorrichtung (200) ein leitfähiges Element (201) umfasst; wobei die Mäusedrückvorrichtung (300) beweglich an einer oberen Wand des Gehäuses (100) installiert ist;
wobei die Verriegelungsvorrichtung (400) ein Verriegelungselement (401), das beweglich in dem Gehäuse (100) installiert ist, und einen Antriebsmechanismus (402) zum Antreiben der Bewegung des Verriegelungselements (401) umfasst,
**dadurch gekennzeichnet, dass**:
sich die Mäusedrückvorrichtung (300) nach unten in Richtung der Basis (102) erstreckt und ein unteres Ende der Mäusedrückvorrichtung (300) über dem leitfähigen Element (201) der Stromschlagvorrichtung (200) angeordnet ist;
wobei das Verriegelungselement (401) zwischen einer verriegelten Position und einer entriegelten Position beweglich ist und mit der Mäusedrückvorrichtung (300) in Eingriff steht, wenn sich das Verriegelungselement (401) in der verriegelten Position befindet, um die Bewegung der Mäusedrückvorrichtung (300) zu begrenzen; und
wobei, wenn sich das Verriegelungselement (401) in der entriegelten Position befindet, das Verriegelungselement (401) außer Eingriff mit der Mäusedrückvorrichtung (300) ist, sodass die Mäusedrückvorrichtung (300) freigegeben wird und beweglich wird.

2. Die Mausefalle nach Anspruch 1, wobei die Mäusedrückvorrichtung (300) mit einem Begrenzungsteil versehen ist, das an das Verriegelungselement (401) angepasst ist, und wenn sich das Verriegelungselement (401) in die verriegelte Position bewegt und diese erreicht, das Verriegelungselement (401) in Eingriff mit dem Begrenzungsteil der Mäusedrückvorrichtung (300) steht, um die Mäusedrückvorrichtung (300) zu verriegeln; und
wenn sich das Verriegelungselement (401) in die entriegelte Position bewegt und diese erreicht, das Verriegelungselement (401) außer Eingriff mit dem Begrenzungsteil der Mäusedrückvorrichtung (300) ist, um die Mäusedrückvorrichtung (300) freizugeben.

3. Die Mausefalle nach Anspruch 2, wobei das Verriegelungselement (401) eine Eingriffsplatte ist und das Begrenzungsteil der Mäusedrückvorrichtung (300) eine Eingriffsnut (3011) ist, die an einer Seite der Mäusedrückvorrichtung (300) ausgebildet ist; in der verriegelten Position ein Ende der Eingriffsplatte in die Eingriffsnut (3011) eingreift und in der entriegelten Position die Klemmplatte außer Eingriff mit der Eingriffsnut (3011) ist.

4. Die Mausefalle nach einem der Ansprüche 1 bis 3, wobei die Stromschlagvorrichtung (200) ferner eine Batterie (202), einen Hochspannungstransformator (203) und eine Steuerleiterplatte (204) umfasst, wobei ein Batteriefach (1014) in dem oberen Gehäuse (101) definiert ist, die Batterie (202) in dem Batteriefach (1014) installiert ist und eine abnehmbare Abdeckplatte (1015) an dem oberen Gehäuse (101) korrespondierend zu dem Batteriefach (1014) angeordnet ist.

5. Die Mausefalle nach Anspruch 4, wobei ferner ein Installationshohlraum (1013) in dem oberen Gehäuse (101) definiert ist, der Installationshohlraum (1013) von dem Batteriefach (1014) getrennt ist und sowohl der Hochspannungstransformator (203) als auch die Steuerleiterplatte (204) in dem Installationshohlraum (1013) installiert sind.

6. Die Mausefalle nach Anspruch 5, wobei das obere Gehäuse (101) ferner einen Fallenbereich (1012) umfasst und der Installationshohlraum (1013) und/oder das Batteriefach (1014) von dem Fallenbereich (1012) isoliert sind.

7. Die Mausefalle nach einem der Ansprüche 1 bis 6, wobei die Mäusedrückvorrichtung (300) einen Mäusedrückrahmen (301) umfasst, sich ein oberes Ende der Mäusedrückvorrichtung (300) durch das obere Gehäuse (101) erstreckt und ein unteres Ende der Mäusedrückvorrichtung (300) innerhalb des oberen Gehäuses (101) angeordnet ist; der Mäusedrückrahmen (301) relativ zu dem oberen Gehäuse (101) nach oben und unten beweglich ist und ein Führungsmechanismus zwischen dem Mäusedrückrahmen (301) und dem oberen Gehäuse (101) ausgebildet ist.

8. Die Mausefalle nach Anspruch 7, wobei die Mäusedrückvorrichtung (300) ferner eine Drückplatte (302) umfasst, die an einer Unterseite des Mäusedrückrahmens (301) und über dem leitfähigen Element (201) installiert ist, und die Drückplatte (302) eine Bodenfläche aufweist, die sich im Wesentlichen horizontal erstreckt.

9. Die Mausefalle nach Anspruch 8, wobei die Mausefalle ein zusätzliches Merkmal aufweist, das aus einem der folgenden ausgewählt ist:
a) die Drückplatte (302) umfasst mindestens eine feste Platte (3021) und mindestens eine bewegliche Platte (3022); die feste Platte (3021) ist an der Unterseite des Mäusedrückrahmens (301) verbunden, und die bewegliche Platte (3022) ist an einer Seite der festen Platte (3021) angeordnet;
b) die Unterseite der Drückplatte (302) ist mit einer Vielzahl von nach außen vorstehenden Antirutschrippen (3205) versehen;
c) eine Oberfläche der Drückplatte (302) ist mit einer Vielzahl von Durchgangsnuten (3026) versehen; und
d) der Führungsmechanismus umfasst mindestens eine Führungssäule (3012) und mindestens eine Hülse (3013), wobei die mindestens eine Führungssäule (3012) fest mit dem Mäusedrückrahmen (301) verbunden ist, die mindestens eine Hülse (3013) fest mit dem oberen Gehäuse (101) verbunden ist; und jede der mindestens einen Hülse (3013) ist um einen Umfang einer entsprechenden der mindestens einen Führungssäule (3012) herum montiert, und die mindestens eine Führungssäule (3012) ist in der mindestens einen Hülse (3013) verschiebbar.

10. Die Mausefalle nach Anspruch 9 in Kombination mit Merkmal a), wobei mindestens eine Gleitschiene (3024) an einer der beweglichen Platte (3022) zugewandten Seite der festen Platte (3021) installiert ist und mindestens eine Gleitnut (3023) an der beweglichen Platte (3022) an einer der festen Platte (3021) zugewandten Seite definiert ist und die mindestens eine Gleitschiene (3024) in die mindestens eine Gleitnut (3023) eingreift und gleitend damit verbunden ist.

11. Die Mausefalle nach Anspruch 9 in Kombination mit Merkmal d), wobei die Mausefalle ein zusätzliches Merkmal e) oder f) aufweist:
e) die mindestens eine Führungssäule (3012) umfasst zwei oder mehr Führungssäulen (3012), wobei die zwei oder mehr Führungssäulen (3012) zwischen dem Mäusedrückrahmen (301) und der Drückplatte (302) verbunden sind; ein oberer Teil jeder Führungssäule (3012) ist mit dem Mäusedrückrahmen (301) verbunden, ein mittlerer Teil jeder Führungssäule (3012) verläuft durch eine entsprechende der mindestens einen Hülse (3013), und ein unteres Ende jeder Führungssäule (3012) ist fest mit der Drückplatte (302) verbunden;
f) ein elastisches Element ist zwischen jeder der mindestens einen Hülse (3013) und einer entsprechenden der mindestens einen Drückplatte (302) installiert, und das elastische Element wird komprimiert, wenn sich die Drückplatte (302) zusammen mit der Bewegung des Mäusedrückrahmens (301) in Richtung der mindestens einen Hülse (3013) bewegt.

12. Die Mausefalle nach Anspruch 11 in Kombination mit Merkmal f), wobei das elastische Element eine Druckfeder (3014) ist, die um einen Umfang einer entsprechenden der mindestens einen Führungssäule (3012) herum montiert ist, und beide Enden der Druckfeder (3014) jeweils gegen die Hülse (3013) und die Drückplatte (302) anliegen.

13. Die Mausefalle nach einem der Ansprüche 1 bis 12, wobei die Mausefalle ferner ein zusätzliches Merkmal m) oder n) aufweist:
m) der Antriebsmechanismus (402) umfasst einen Antriebsmotor (4022) in Drehmomentübertragungsverbindung mit dem Verriegelungselement, um das Verriegelungselement anzutreiben, sich zwischen der verriegelten Position und der entriegelten Position zu bewegen;
n) die Verriegelungsvorrichtung (400) umfasst ferner ein Vorspannelement, das zwischen dem oberen Gehäuse (101) und dem Verriegelungselement komprimiert ist, um eine Kraft auf das Verriegelungselement auszuüben, um das Verriegelungselement in Richtung der verriegelten Position vorzuspannen.

14. Die Mausefalle nach Anspruch 13 in Kombination mit Merkmal m), wobei der Antriebsmechanismus (402) ferner einen Montagerahmen (4021) und einen Drehteller (4023) umfasst, wobei der Montagerahmen (4021) fest im Inneren des oberen Gehäuses (101) installiert ist; der Antriebsmotor (4022) ist im Inneren des Montagerahmens (4021) installiert, und der Drehteller (4023) ist drehbar an einer Unterseite des Montagerahmens (4021) installiert; ein Teil des Antriebsmotors (4022) steht in Drehmomentverbindung mit dem Drehteller (4023), und ein Kopplungsmechanismus ist zwischen dem Drehteller (4023) und dem Verriegelungselement ausgebildet.

15. Die Mausefalle nach Anspruch 14, wobei der Kopplungsmechanismus eine bogenförmige Nut (4011) und mindestens einen Zylinder (4024) umfasst, wobei die bogenförmige Nut (4011) an dem Verriegelungselement an einer dem Drehteller (4023) zugewandten Seite ausgebildet ist und der mindestens eine Zylinder (4024) an einer Unterseite des Drehtellers (4023) angeordnet ist.

## Revendications

1. Un piège à souris, comprenant une coque (100), dans lequel la coque (100) comprend une base (102) et un boîtier supérieur (101) relié à un sommet de la base (102);
dans lequel le piège à souris comprend en outre un dispositif de choc électrique (200), un dispositif de pression de souris (300) et un dispositif de verrouillage (400) agencés dans la coque (100);
dans lequel le dispositif de choc électrique (200) comprend un élément conducteur (201);
dans lequel le dispositif de pression de souris (300) est installé de manière mobile sur une paroi supérieure de la coque (100);
dans lequel le dispositif de verrouillage (400) comprend un élément de verrouillage (401) installé de manière mobile dans la coque (100), et un mécanisme d'entraînement (402) pour entraîner l'élément de verrouillage (401) en mouvement,
**caractérisé en ce que**:
le dispositif de pression de souris (300) s'étend vers le bas en direction de la base (102), et une extrémité inférieure du dispositif de pression de souris (300) est située au-dessus de l'élément conducteur (201) du dispositif de choc électrique (200);
dans lequel l'élément de verrouillage (401) est mobile entre une position verrouillée et une position déverrouillée, et est en prise avec le dispositif de pression de souris (300) lorsque l'élément de verrouillage (401) est situé dans la position verrouillée, de manière à limiter le mouvement du dispositif de pression de souris (300); et
dans lequel, lorsque l'élément de verrouillage (401) est dans la position déverrouillée, l'élément de verrouillage (401) est dégagé du dispositif de pression de souris (300), de sorte que le dispositif de pression de souris (300) est libéré et devient mobile.

2. Le piège à souris selon la revendication 1, dans lequel le dispositif de pression de souris (300) est pourvu d'une partie de limitation coopérant avec l'élément de verrouillage (401), et lorsque l'élément de verrouillage (401) se déplace vers et atteint la position verrouillée, l'élément de verrouillage (401) est en prise avec la partie de limitation du dispositif de pression de souris (300) pour verrouiller le dispositif de pression de souris (300); et
lorsque l'élément de verrouillage (401) se déplace vers et atteint la position déverrouillée, l'élément de verrouillage (401) est dégagé de la partie de limitation du dispositif de pression de souris (300) pour libérer le dispositif de pression de souris (300).

3. Le piège à souris selon la revendication 2, dans lequel l'élément de verrouillage (401) est une plaque d'engagement, et la partie de limitation du dispositif de pression de souris (300) est une rainure d'engagement (3011) formée sur un côté du dispositif de pression de souris (300); dans la position verrouillée, une extrémité de la plaque d'engagement est engagée dans la rainure d'engagement (3011), et dans la position déverrouillée, la plaque de serrage est dégagée de la rainure d'engagement (3011).

4. Le piège à souris selon l'une quelconque des revendications 1 à 3, dans lequel le dispositif de choc électrique (200) comprend en outre une batterie (202), un transformateur haute tension (203) et une carte de circuit de commande (204), dans lequel un compartiment à batterie (1014) est défini dans le boîtier supérieur (101), la batterie (202) est installée dans le compartiment à batterie (1014), et une plaque de recouvrement détachable (1015) est agencée sur le boîtier supérieur (101) en correspondance avec le compartiment à batterie (1014).

5. Le piège à souris selon la revendication 4, dans lequel une cavité d'installation (1013) est en outre définie dans le boîtier supérieur (101), la cavité d'installation (1013) est séparée du compartiment à batterie (1014), et à la fois le transformateur haute tension (203) et la carte de circuit de commande (204) sont installés dans la cavité d'installation (1013).

6. Le piège à souris selon la revendication 5, dans lequel le boîtier supérieur (101) comprend en outre une région de piège (1012), et la cavité d'installation (1013) et/ou le compartiment à batterie (1014) sont isolés de la région de piège (1012).

7. Le piège à souris selon l'une quelconque des revendications 1 à 6, dans lequel le dispositif de pression de souris (300) comprend un cadre de pression de souris (301), une extrémité supérieure du dispositif de pression de souris (300) s'étend à travers le boîtier supérieur (101) et une extrémité inférieure du dispositif de pression de souris (300) est située à l'intérieur du boîtier supérieur (101); le cadre de pression de souris (301) est mobile vers le haut et vers le bas par rapport au boîtier supérieur (101), et un mécanisme de guidage est formé entre le cadre de pression de souris (301) et le boîtier supérieur (101).

8. Le piège à souris selon la revendication 7, dans lequel le dispositif de pression de souris (300) comprend en outre une plaque de pression (302) installée au niveau d'un fond du cadre de pression de souris (301) et au-dessus de l'élément conducteur (201), et la plaque de pression (302) présente une surface inférieure s'étendant de manière sensiblement horizontale.

9. Le piège à souris selon la revendication 8, dans lequel le piège à souris présente une caractéristique supplémentaire choisie parmi l'une des suivantes:
a) la plaque de pression (302) comprend au moins une plaque fixe (3021) et au moins une plaque mobile (3022); la plaque fixe (3021) est reliée au fond du cadre de pression de souris (301), et la plaque mobile (3022) est située sur un côté de la plaque fixe (3021);
b) le fond de la plaque de pression (302) est pourvu d'une pluralité de nervures antidérapantes (3205) faisant saillie vers l'extérieur;
c) une surface de la plaque de pression (302) est pourvue d'une pluralité de rainures traversantes (3026); et
d) le mécanisme de guidage comprend au moins un montant de guidage (3012) et au moins un manchon (3013), dans lequel ledit au moins un montant de guidage (3012) est relié de manière fixe au cadre de pression de souris (301), ledit au moins un manchon (3013) est relié de manière fixe au boîtier supérieur (101); et chacun dudit au moins un manchon (3013) est monté autour d'une périphérie d'un montant correspondant dudit au moins un montant de guidage (3012) et ledit au moins un montant de guidage (3012) peut coulisser dans ledit au moins un manchon (3013).

10. Le piège à souris selon la revendication 9 en combinaison avec la caractéristique a), dans lequel au moins une barre de glissement (3024) est installée sur un côté de la plaque fixe (3021) faisant face à la plaque mobile (3022), et au moins une rainure de glissement (3023) est définie sur la plaque mobile (3022) au niveau d'un côté faisant face à la plaque fixe (3021), et ladite au moins une barre de glissement (3024) est engagée dans et reliée de manière coulissante à ladite au moins une rainure de glissement (3023).

11. Le piège à souris selon la revendication 9 en combinaison avec la caractéristique d), dans lequel le piège à souris présente une caractéristique supplémentaire e) ou f):
e) au moins un montant de guidage (3012) comprend deux montants de guidage (3012) ou plus, les deux montants de guidage (3012) ou plus sont reliés entre le cadre de pression de souris (301) et la plaque de pression (302); une partie supérieure de chaque montant de guidage (3012) est reliée au cadre de pression de souris (301), une partie médiane de chaque montant de guidage (3012) passe à travers un manchon correspondant dudit au moins un manchon (3013), et une extrémité inférieure de chaque montant de guidage (3012) est reliée de manière fixe à la plaque de pression (302);
f) un élément élastique est installé entre chacun dudit au moins un manchon (3013) et une plaque correspondante de ladite au moins une plaque de pression (302), et l'élément élastique est comprimé lorsque la plaque de pression (302) se déplace vers ledit au moins un manchon (3013) conjointement avec le mouvement du cadre de pression de souris (301).

12. Le piège à souris selon la revendication 11 en combinaison avec la caractéristique f), dans lequel l'élément élastique est un ressort de compression (3014) monté autour d'une périphérie d'un montant correspondant dudit au moins un montant de guidage (3012), et les deux extrémités du ressort de compression (3014) viennent respectivement en butée contre le manchon (3013) et la plaque de pression (302).

13. Le piège à souris selon l'une quelconque des revendications 1 à 12, dans lequel le piège à souris présente en outre une caractéristique supplémentaire m) ou n):
m) le mécanisme d'entraînement (402) comprend un moteur d'entraînement (4022) en liaison de transmission de couple avec l'élément de verrouillage pour entraîner l'élément de verrouillage en mouvement entre la position verrouillée et la position déverrouillée;
n) le dispositif de verrouillage (400) comprend en outre un élément de sollicitation comprimé entre le boîtier supérieur (101) et l'élément de verrouillage pour fournir une force à l'élément de verrouillage afin de solliciter l'élément de verrouillage vers la position verrouillée.

14. Le piège à souris selon la revendication 13 en combinaison avec la caractéristique m), dans lequel le mécanisme d'entraînement (402) comprend en outre un cadre de montage (4021) et un plateau tournant (4023), dans lequel le cadre de montage (4021) est installé de manière fixe à l'intérieur du boîtier supérieur (101); le moteur d'entraînement (4022) est installé à l'intérieur du cadre de montage (4021), et le plateau tournant (4023) est installé de manière rotative au niveau d'un fond du cadre de montage (4021); une partie du moteur d'entraînement (4022) est en liaison de couple avec le plateau tournant (4023), et un mécanisme de couplage est formé entre le plateau tournant (4023) et l'élément de verrouillage.

15. Le piège à souris selon la revendication 14, dans lequel le mécanisme de couplage comprend une rainure en forme d'arc (4011) et au moins un cylindre (4024), dans lequel la rainure en forme d'arc (4011) est formée sur l'élément de verrouillage au niveau d'un côté faisant face au plateau tournant (4023), et ledit au moins un cylindre (4024) est agencé au niveau d'un fond du plateau tournant (4023).
